# EUROPÄISCHE PATENTSCHRIFT

(11) **EP 3 045 326 B1**
(45) Veröffentlichungstag und Bekanntmachung des Hinweises auf die Patenterteilung: **31.07.2019**
(21) Anmeldenummer: 15193994.9
(22) Anmeldetag: 11.11.2015
(51) Int. Cl.: B60C 11/12, B60C 11/03

(54) **FAHRZEUGLUFTREIFEN**
PNEUMATIC TYRES FOR A VEHICLE
PNEUMATIQUES DE VÉHICULE

(30) Priorität: 13.01.2015 DE 102015200362
(43) Veröffentlichungstag der Anmeldung: 20.07.2016
(73) Patentinhaber: Continental Reifen Deutschland GmbH, 30165 Hannover (DE)
(72) Erfinder: Heinhaupt, Torsten, 29313 Hambühren (DE)
(74) Vertreter: Finger, Karsten

(56) Entgegenhaltungen:
- WO-A1-2013/042023
- JP-A- 2009 090 874

## Beschreibung

### Fahrzeugluftreifen

Die Erfindung betrifft einen Fahrzeugluftreifen, insbesondere für den Einsatz unter winterlichen Fahrbedingungen, mit einem Laufstreifen, welcher in jeder Laufstreifenhälfte drei Blockreihen, je eine zentrale Blockreihe, eine mittlere Blockreihe im mittleren Bereich des Laufstreifens sowie eine schulterseitige Blockreihe aufweist, welche durch Querrillen sowie durch Umfangsrillen voneinander getrennt und in Profilblöcke gegliedert sind, wobei jeweils die Profilblöcke der mittleren Profilblockreihe in Umfangsrichtung durch Querrillen voneinander getrennt sind,, welche an der Laufstreifenoberfläche durch Profilblockkanten begrenzt sind, welche sämtlich zumindest im Wesentlichen parallel zueinander und unter einem Winkel von 30° bis 45° zur axialen Richtung verlaufen, wobei jeder Profilblock mit zumindest zwei Einschnitten versehen ist, die in Draufsicht wellen-, zickzack-, treppenförmig oder dergleichen und in jedem Profilblock zueinander parallel verlaufen.

Ein derartiger Fahrzeugluftreifen ist aus der WO2013/042023 A1 bekannt. Der Reifen weist einen Laufstreifen auf, in welchem eine zentrale, entlang der Äquatorebene des Reifens verlaufende Profilblockreihe vorgesehen ist, deren Profilblöcke mit parallel zueinander verlaufenden Einschnitten versehen sind. Jeweils zwei in Umfangsrichtung aufeinander folgende Profilblöcke weisen Einschnitte auf, die in der einen Richtung bezüglich der Umfangsrichtung geneigt sind, wobei diese Profilblöcke mit jeweils zwei Profilblöcken abwechseln, deren Einschnitte bezüglich der anderen Umfangrichtung geneigt sind. Abgesehen von der unterschiedlichen Neigung verlaufen die Einschnitte unter gleich großen Winkeln zur Umfangsrichtung. In den an die zentrale Blockreihe anschließenden mittleren Blockreihen sind jeweils lediglich parallel zueinander verlaufende Einschnitte ausgebildet, die unter einem Winkel von etwa 30° zu den von Querrillen begrenzten Profilblockkanten dieser Profilblöcke verlaufen. Die Ausgestaltung von Profilblöcken mit "inclined and counter-inclined sipes" im zentralen Laufstreifenbereich soll sich vor allem auf Grip, Traktion und Bremsen beim Fahren auf schneebedecktem oder eisigem Untergrund positiv auswirken.

Die JP 2009 090874 A offenbart einen Fahrzeugluftreifen mit einem Laufstreifen, welcher mehrere Profilblockreihen aufweist, insbesondere eine entlang der Äquatorebene verlaufenden Blockreihe, zwei schulterseitige Blockreihen und zwei mittleren Blockreihen. Jeweils zwei in Umfangsrichtung aufeinander folgende Profilblöcke in den mittleren Blockreihen weisen Einschnitte auf, die sich parallel zu den Profilblockkanten erstrecken. Diese Profilblöcke wechseln in Umfangsrichtung mit Profilblöcken ab, die Einschnitte aufweisen, die gegensinnig zu den Einschnitten in den beiden erstgenannten Profilblöcken verlaufen. Sämtliche Einschnitte verlaufen unter einem sehr kleinen Winkel von höchsten 25° zur Querrichtung bzw. zu den von Querrillen begrenzten Profilblockkanten. Ein Reifen mit einem solchen Laufstreifen soll ebenfalls für ein Fahren auf mit Eis und Schnee bedeckten Fahrbahnen vorteilhaft sein.

Fahrzeugluftreifen mit Laufstreifen, die Profilblöcke mit in Wellen- oder Zickzackform verlaufenden Einschnitten aufweisen, sind in unterschiedlichen Ausführungsvarianten bekannt. Solche Einschnitte sind vor allem dazu gut geeignet, die Griffeigenschaften des Laufstreifens auf winterlichen Fahrbahnen, wie auf Schnee, Schneematsch oder Eis, zu verbessern und haben durch ihren Verlauf auch eine stabilisierende Wirkung auf die Profilblöcke. Ein Fahrzeugluftreifen mit Profilblöcken in einer mittleren Blockreihe, deren Profilblöcke mit wellenförmig verlaufenden Einschnitten versehen sind, ist beispielsweise aus der EP 2 353 884 A1 bekannt. In diesen Profilblöcken erstrecken sich die Einschnitte zwar parallel zueinander, jedoch unter einem spitzen Winkel zu den die Querrillen begrenzenden Profilblockkanten. Ein Laufstreifen mit innerhalb einer Profilblockreihe angeordneten Profilblöcken, bei welchen zickzack- bzw. treppenförmig verlaufende Einschnitte parallel zueinander verlaufend vorgesehen sind, die ebenfalls unter einem spitzen Winkel zu den die Querrillen begrenzenden Profilblockkanten verlaufen, ist aus der EP 1 926 609 B1 bekannt. Durch die übereinstimmende Erstreckung der Einschnitte ändert sich, wenn die Belastungsrichtung, beispielsweise beim Kurvenfahren, geändert wird, das Fahrverhalten des Reifens je nach Ausrichtung der Einschnitte.

Der Erfindung liegt die Aufgabe zu Grunde, bei einem Fahrzeugluftreifen der eingangs genannten Art das Handlingverhalten bei in unterschiedlichen Richtungen - Umfangsrichtung, Querrichtung oder Richtungen zwischen Umfangs- und Querrichtung - wirkenden Belastungen, insbesondere beim Kurvenfahren, vor allem auf winterlichen Fahrbahnen, insbesondere auf Schnee, zu verbessern.

Gelöst wird die gestellte Aufgabe erfindungsgemäß dadurch, dass in den mittleren Profilblockreihen in Umfangsrichtung jeweils ein Profilblock, in welchem die Einschnitte parallel zu den von Querrillen begrenzten Profilblockkanten verlaufen, mit einem Profilblock abwechselt, in welchem die Einschnitte unter einem Winkel von 50° bis 70° zu den von den Querrillen begrenzten Profilblockkanten verlaufen.

Ein Laufstreifen mit einer Profilblockreihe mit einer derart abwechselnden Anordnung der Einschnitte in den in Umfangsrichtung aufeinanderfolgenden Profilblöcken ist hinsichtlich des Ansprechverhaltens der im Betrieb des Reifens in verschiedenen Richtungen wirkenden Kräfte verbessert. Daraus ergibt sich ein konstantes und gutes Handlingverhalten sowohl bei in Umfangsrichtung als auch bei in Querrichtung wirkenden Kräften, insbesondere beim Kurvenfahren. Für das Brems- und Traktionsverhalten des Reifens auf Schnee ist die erfindungsgemäße Anordnung der Einschnitte besonders vorteilhaft.

Bei einer bevorzugten Ausführungsform der Erfindung sind die parallel zu den von Querrillen begrenzten Profilblockkanten verlaufenden Einschnitte zueinander und zu den Profilblockkanten im Wesentlichen gleich beabstandet und es sind vorzugsweise die unter einem Winkel zu den von Querrillen begrenzten Profilblockkanten verlaufenden Einschnitte zueinander im Wesentlichen gleich beabstandet. Die Profilblöcke sind daher gleichmäßig steif bzw. stabil ausgeführt, was vor allem für die Handlingeigenschaften des Reifens von Vorteil ist.

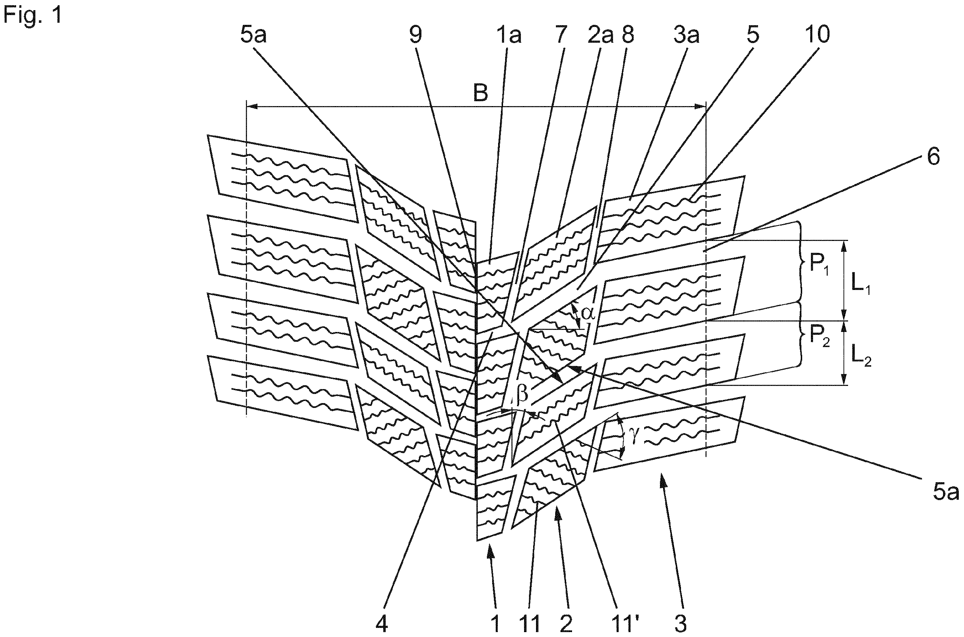

Weitere Merkmale, Vorteile und Einzelheiten der Erfindung werden nun anhand der Zeichnung, die ein Ausführungsbeispiel darstellt, näher beschrieben. Die einzige Zeichnungsfigur, Fig. 1, zeigt eine Draufsicht auf eine Teilabwicklung eines Laufstreifens eines Fahrzeugluftreifens.

Der in Fig. 1 gezeigte Laufstreifen ist für Winterreifen oder Ganzjahresreifen von Personenkraftwagen, Vans oder dergleichen vorgesehen. Der beispielhaft dargestellte Laufstreifen ist zwar laufrichtungsgebunden ausgeführt, die Erfindung ist jedoch nicht auf laufrichtungsgebundene Laufstreifen beschränkt. Mit B ist jene Breite des Laufstreifens bezeichnet, über welche der Reifen beim Abrollen mit dem Untergrund in Kontakt tritt. B entspricht daher der Breite des bodenberührenden Teils des Laufstreifens und gemäß E.T.R.T.O.-Standards der Breite des statisch ermittelten Footprints (Last bei 70 % der Tragfähigkeit bei einem Innendruck von 2,5 bar, Innendruck 85 % von 2,5 bar).

Beim dargestellten Ausführungsbeispiel weist der Laufstreifen in jeder Laufstreifenhälfte drei Blockreihen 1, 2, 3 - je eine zentrale Blockreihe 1 und eine mittlere Blockreihe 2 im mittleren Bereich des Laufstreifens sowie eine schulterseitige Blockreihe 3 - auf, welche durch Querrillen 4, 5 und 6 sowie durch Umfangsrillen 7 und 8 voneinander getrennt und in Profilblöcke 1a, 2a und 3a gegliedert sind. Unter "Querrillen" werden im Rahmen der Erfindung Rillen verstanden, welche eine Erstreckungsrichtung aufweisen, die um bis zu 45° von der axialen Richtung abweicht. Die beiden zentralen Blockreihen 1 sind bei der gezeigten Ausführung durch einen entlang des Reifenäquators verlaufenden schmalen, oberflächlichen Einschnitt 9 voneinander getrennt.

In den Profilblöcken 1a und 3a ist eine Anzahl von Einschnitten 10, in den Profilblöcken 2a der mittleren Blockreihe 2 sind Einschnitte 11, 11' ausgebildet. Sämtliche Einschnitte 10, 11, 11' sind bei der gezeigten Ausführungsform in Draufsicht wellen- bzw. zickzackförmig verlaufende Einschnitte, welche die Profilblöcke 1a, 2a, 3a durchqueren und eine Breite von insbesondere 0,4 mm bis 0,6 mm aufweisen. Bei der dargestellten Ausführung weisen ferner sämtliche Einschnitte 10, 11, 11' eine weitgehend gleichmäßige bzw. regelmäßige Wellenform mit innerhalb der Profilblöcke 1a, 2a, 3a der jeweiligen Blockreihe 1, 2, 3 zumindest im Wesentlichen oder weitgehend übereinstimmenden Amplituden und Wellenlängen auf. Die Einschnitte 10, 11, 11' können jedoch auch über ihre Erstreckung variierende Amplituden und Wellenlängen aufweisen und ferner in einer Art Treppenform bzw. in einer Zickzackform mit abwechselnd kurzen und längeren Zickzackabschnitten verlaufen.

Die vorgesehenen Profilstrukturen sind, wie es üblich ist, nach einem Verfahren der Pitchlängenvariation geräuschoptimiert ausgeführt, sodass die Profilblöcke 1a, 2a, 3a jeweils gemeinsam mit einer der ihnen benachbart verlaufenden Querrillen 4, 5, 6 innerhalb eines sogenannten "Pitch" verlaufen, wobei diese Pitches P₁, P₂ in unterschiedlichen Umfangslängen L₁, L₂ ausgeführt sind. Beim gezeigten Ausführungsbeispiel sind Pitches P₁, P₂ mit zwei unterschiedlichen Umfangslängen L₁, L₂ dargestellt, und zwar je zwei aufeinanderfolgende kürzere Pitches P₂ und zwei längere Pitches P₁, die ebenfalls unmittelbar aufeinander folgen, wobei die Anzahl der Einschnitte 10, 11, 11' in den kürzeren Pitches P₂ geringer ist als die Anzahl der Einschnitte 10, 11, 11' in den längeren Pitches P₁.

Die Profilblöcke 2a in der mittleren Blockreihe 2 sind in Draufsicht parallelogrammförmig gestaltet und weisen an der Laufstreifenoberfläche zwei die Querrillen 5 begrenzende Profilblockkanten 5a auf, die sämtlich im Wesentlichen parallel zueinander verlaufen, wobei der Winkel α, den die Profilblockkanten 5a mit der axialen Richtung einschließen, 30° bis 45° beträgt. Die von den Umfangsrillen 7, 8 begrenzten Profilblockkanten 7a und 8a verlaufen unter einem Winkel β von 0° bis 10° zur Umfangsrichtung. In jedem in Umfangsrichtung zweiten Profilblock 2a verlaufen die Einschnitte 11, in den weiteren Profilblöcken 2a, die mit den erstgenannten abwechseln, die Einschnitte 11'. Die Einschnitte 11' erstrecken sich parallel zu den Profilblockkanten 5a, wobei in Profilblöcken 2a, die sich in einem kürzeren Pitch P₂ befinden, zwei Einschnitte 11', in Profilblöcken 2a, die sich in einem Pitch P₁ mit größerer Umfangslänge L₁ befinden, drei Einschnitte 11' verlaufen. Die Anordnung der Einschnitte 11' in den Profilblöcken 2a ist ferner derart, dass sie zueinander und zu den Profilblockkanten 5a zumindest im Wesentlichen gleich große Abstände aufweisen, sodass zwischen den Einschnitten 11' und zwischen den Einschnitten 11' und den Profilblockkanten 5a Profilblockelemente gebildet sind, die im Wesentlichen gleich große Flächen aufweisen. Die in den anderen Profilblöcken 2a verlaufenden Einschnitte 11 erstrecken sich unter einem Winkel γ, welcher 50° bis 70° beträgt, zu den Profilblockkanten 5a. Dabei erstrecken sich die Einschnitte 11 ebenfalls sämtlich parallel zueinander und unter zumindest im Wesentlichen gleich großen Abständen. In den betreffenden Profilblöcken 2a sind vorzugsweise so viele Einschnitte 11 vorgesehen, wie unter Einhaltung des im Wesentlichen gleich großen Abstandes untergebracht werden können. Zu den spitzwinkeligen Ecken der Profilblöcke 2a wird dabei ein größerer Abstand eingehalten, da diese Ecken üblicherweise - wie hier jedoch nicht dargestellt - angefast werden.

Die Profilblöcke 2a mit parallel zu den Profilblockkanten 5a verlaufenden Einschnitten 11 'sind etwas "weicher" als die anderen Profilblöcke 2a. Bei Kurvenfahrt wirken daher, je nach Richtung der einwirkenden Kräfte, die einen Profilblöcke insgesamt auf den Laufstreifen versteifend, die anderen Profilblöcke 2a geben etwas mehr nach. Daraus resultieren gute Handlingeigenschaften des Fahrzeugluftreifens unter allen Fahrbedingungen, insbesondere ist die erfindungsgemäße Anordnung der Einschnitte 11, 11' für das Fahrverhalten und die Handlingeigenschaften auf schneeigem Untergrund besonders vorteilhaft, vor allem beim Bremsen und bei Traktionsbeanspruchungen auf Schnee. Die erfindungsgemäße Einschnittanordnung ist besonders in zentralen und mittleren Profilblockreihen oder Profilbändern vorteilhaft.

### Bezugsziffernliste

- 1, 2, 3: Blockreihe
- 1a, 2a, 3a: Profilblock
- 4, 5, 6: Querrille
- 5a: Profilblockkante
- 7, 8: Umfangsrille
- 9: Einschnitt
- 10, 11, 11': Einschnitt
- B: Breite
- L₁, L₂: Umfangslänge
- P₁, P₂: Pitch
- α, β, γ: Winkel

## Patentansprüche

1. Fahrzeugluftreifen, insbesondere für den Einsatz unter winterlichen Fahrbedingungen, mit einem Laufstreifen, welcher in jeder Laufstreifenhälfte drei Blockreihen (1, 2, 3), je eine zentrale Blockreihe (1), eine mittlere Blockreihe (2) im mittleren Bereich des Laufstreifens sowie eine schulterseitige Blockreihe (3) aufweist, welche durch Querrillen (4, 5, 6) sowie durch Umfangsrillen (7, 8) voneinander getrennt und in Profilblöcke (1a, 2a, 3a) gegliedert sind, wobei jeweils die Profilblöcke (2a) der mittleren Profilblockreihe (2) in Umfangsrichtung durch Querrillen (5) voneinander getrennt sind, welche an der Laufstreifenoberfläche durch Profilblockkanten (5a) begrenzt sind, welche sämtlich zumindest im Wesentlichen parallel zueinander und unter einem Winkel (α) von 30° bis 45° zur axialen Richtung verlaufen, wobei jeder Profilblock (2a) mit zumindest zwei Einschnitten (11, 11') versehen ist, die in Draufsicht wellen-, zickzack-, treppenförmig oder dergleichen und in jedem Profilblock (2a) zueinander parallel verlaufen,
**dadurch gekennzeichnet,**
**dass** in den mittleren Profilblockreihen (2) in Umfangsrichtung jeweils ein Profilblock (2a), in welchem die Einschnitte (11') parallel zu den von Querrillen (5) begrenzten Profilblockkanten (5a) verlaufen, mit einem Profilblock (2a) abwechselt, in welchem die Einschnitte (11) unter einem Winkel (γ) von 50° bis 70° zu den von den Querrillen (5) begrenzten Profilblockkanten (5a) verlaufen.

2. Fahrzeugluftreifen nach Anspruch 1, **dadurch gekennzeichnet, dass** die parallel zu den von Querrillen (5) begrenzten Profilblockkanten (5a) verlaufenden Einschnitte (11') zueinander und zu den Profilblockkanten (5a) im Wesentlichen gleich beabstandet sind.

3. Fahrzeugluftreifen nach Anspruch 1 oder 2, **dadurch gekennzeichnet, dass** die unter einem Winkel zu den von Querrillen (5) begrenzten Profilblockkanten (5a) verlaufenden Einschnitte (11) zueinander im Wesentlichen gleich beabstandet sind.

## Claims

1. Pneumatic vehicle tyre, in particular for use under winter driving conditions, having a tread which has three block rows (1, 2, 3) in each tread half, respectively a central block row (1), a middle block row (2) in the middle region of the tread and a shoulder-side block row (3), which are separated from one another by transverse grooves (4, 5, 6) and by circumferential grooves (7, 8) and are subdivided into profile blocks (1a, 2a, 3a), wherein in each case the profile blocks (2a) of the middle profile block row (2) are separated from one another in the circumferential direction by transverse grooves (5) which are delimited on the tread surface by profile block edges (5a) which all extend at least substantially parallel to one another and at an angle (α) of 30° to 45° to the axial direction, wherein each profile block (2a) is provided with at least two sipes (11, 11') which, as seen in plan view, extend in a wavy, zigzag, staircase or suchlike manner and parallel to one another in each profile block (2a),
**characterized**
**in that**, in the middle profile block rows (2), in the circumferential direction, in each case a profile block (2a) in which the sipes (11') extend parallel to the profile block edges (5a) delimited by transverse grooves (5) is alternated with a profile block (2a) in which the sipes (11) extend at an angle (γ) of 50° to 70° to the profile block edges (5a) delimited by the transverse grooves (5).

2. Pneumatic vehicle tyre according to Claim 1, **characterized in that** the sipes (11') extending parallel to the profile block edges (5a) delimited by transverse grooves (5) are substantially equally spaced apart from one another and from the profile block edges (5a).

3. Pneumatic vehicle tyre according to Claim 1 or 2, **characterized in that** the sipes (11) extending at an angle to the profile block edges (5a) delimited by transverse grooves (5) are substantially equally spaced apart from one another.

## Revendications

1. Pneumatique de véhicule, à utiliser en particulier dans des conditions de circulation hivernales, avec une bande de roulement, qui présente dans chaque moitié de bande de roulement trois rangées de blocs (1, 2, 3), chaque fois une rangée de blocs centrale (1), une rangée de blocs médiane (2) dans la région médiane de la bande de roulement ainsi qu'une rangée de blocs côté épaulement (3), qui sont séparées l'une de l'autre par des rainures transversales (4, 5, 6) ainsi que par des rainures périphériques (7, 8) et qui sont divisées en blocs profilés (1a, 2a, 3a), dans lequel les blocs profilés (2a) de la rangée médiane de blocs profilés (2) sont séparés l'un de l'autre en direction périphérique par des rainures transversales (5), qui sont limitées à la surface de la bande de roulement par des arêtes de blocs profilés (5a), qui toutes sont essentiellement parallèles l'une à l'autre et s'étendent sous un angle (α) de 30° à 45° par rapport à la direction axiale, dans lequel chaque bloc profilé (2a) est muni d'au moins deux entailles (11, 11'), qui dans une vue en plan ont une forme d'onde, de zigzag, d'escalier ou similaire, et qui sont parallèles l'une à l'autre dans chaque bloc profilé (2a),
**caractérisé en ce que** dans les rangées médianes de blocs profilés (2) en direction périphérique chaque fois un bloc profilé (2a), dans lequel les entailles (11, 11') s'étendent parallèlement aux arêtes de blocs profilés (5a) limitées par les rainures transversales (5), alterne avec un bloc profilé (2a), dans lequel les entailles (11, 11') s'étendent sous un angle (γ) de 50° à 70° par rapport aux arêtes de blocs profilés (5a) limitées par les rainures transversales (5).

2. Pneumatique de véhicule selon la revendication 1, **caractérisé en ce que** les entailles (11') s'étendant parallèlement aux arêtes de blocs profilés (5a) limitées par des rainures transversales (5) sont espacées de façon essentiellement égale l'une de l'autre et des arêtes de blocs profilés (5a).

3. Pneumatique de véhicule selon une revendication 1 ou 2, **caractérisé en ce que** les entailles (11) s'étendant sous un angle par rapport aux arêtes de blocs profilés (5a) limitées par des rainures transversales (5) sont espacées l'une de l'autre de façon essentiellement égale.
